**Europäisches Patentamt**

**European Patent Office**

**Office européen des brevets**

(19)

(11) Numéro de publication: **0 031 743**
**B1**

(12) ## FASCICULE DE BREVET EUROPEEN

(45) Date de publication du fascicule du brevet:
24.10.84

(51) Int. Cl.³: **G 06 F 9/26**

(21) Numéro de dépôt: **80401740.8**

(22) Date de dépôt: **05.12.80**

(54) Dispositif de gestion de microinstructions enregistrées dans une mémoire d'une unité de traitement de l'information.

(30) Priorité: **27.12.79 FR 7931793**

(43) Date de publication de la demande:
**08.07.81 Bulletin 81/27**

(45) Mention de la délivrance du brevet:
**24.10.84 Bulletin 84/43**

(84) Etats contractants désignés:
**BE DE NL**

(56) Documents cités:
**FR - A - 2 221 052**
**GB - A - 1 443 064**
**US - A - 3 646 522**
**US - A - 3 984 817**
**US - A - 4 001 788**
**US - A - 4 138 738**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Cassonnet, Jean-Claude Marcel, CII Honeywell Bull 94, avenue Gambetta, F-75020 Paris (FR)**
Inventeur: **Lamarche, Marie-Odile née Lechevin, CII Honeywell Bull 94 avenue Gambetta, F-75020 Paris (FR)**

(74) Mandataire: **Denis, Hervé, COMPAGNIE INTERNATIONALE POUR L'INFORMATIQUE CII-HONEYWELL BULL 94, avenue Gambetta, F-75960 Paris Cedex 20 (FR)**

ACTORUM AG

## Description

La présente invention concerne un dispositif de gestion de microinstructions enregistrées dans une mémoire d'une unité de traitement de l'information.

Cette invention s'applique au déroulement des microprogrammes dans des unités de traitement de l'information, microprogrammées et, plus particulièrement, à la gestion des adresses de microinstructions groupées en segments de microprogrammes qui sont respectivement définis par une base, les différentes adresses de base étant situées par exemple dans la mémoire centrale de l'unité de traitement, comme cela est décrit dans le brevet français no 2 221 052 dont la demande a été déposée le 6 mars 1973 au nom du demandeur.

Elle s'applique également à la sauvegarde des adresses de base et des adresses de retour, lors d'une interruption d'un microprogramme en cours de déroulement.

On sait que la plupart des unités actuelles de traitement de l'information font appel à la microprogrammation qui consiste à répartir les tâches à effectuer, en microprogrammes. Les microprogrammes sont constitués de plusieurs microinstructions qui sont généralement enregistrées dans une mémoire de commande de l'unité de commande. Une instruction logicielle utilise généralement plusieurs microinstructions. L'ensemble des microprogrammes constitue le micrologiciel de l'unité de traitement; ce micrologiciel coopère, d'une part avec les parties matérielles de cette unité et, d'autre part, avec le logiciel. Le micrologiciel est généralement inscrit dans une mémoire morte de l'unité centrale de traitement, ainsi que dans une partie vive de la mémoire centrale, qui peut être reconfigurée. Les différents microprogrammes sont organisés en blocs fonctionnels qualifiés de segments de microprogrammes qui, s'ils sont placés dans la mémoire vive de l'unité de traitement, doivent rester inaccessibles au logiciel. L'appel des microprogrammes et, notamment l'appel des segments de microprogrammes, est effectué à partir de l'adresse de base de chacun des segments tel que décrit dans le brevet précité. Cette adresse de base est généralement chargée dans un registre au moment où un segment de microprogramme doit être appelé dans la mémoire. L'adresse réelle de la microinstruction qui est recherchée à l'intérieur d'un segment, est alors obtenue par addition de la base avec l'adresse relative par rapport à la base de la microinstruction recherchée. Un système d'adressage de ce type est décrit dans le brevet G.B. 1 443 064. D'une façon générale, ces systèmes connus d'adressage de segments de microprogrammes, ont pour inconvénients de requérir une instruction provenant du logiciel, pour chaque changement de base, ce qui nécessite un temps-machine précieux. De plus, en cas d'interruption de microprogramme, les dispositifs d'adressage existants ne permettent pas de sauvegarder le contenu du registre de base correspondant au segment de microprogramme en cours de déroulement, au moment de l'interruption si le microprogramme utilise une autre base. Enfin, aucun dispositif connu ne prévoit de manière simple des changements rapides de microprogrammes, permettant de réaliser très rapidement des modifications du mode de fonctionnement de l'unité de traitement. Ces modes de fonctionnement, dans les unités de traitement modernes, correspondent par exemple à un fonctionnement dans un mode de fonctionnement d'une autre machine.

La présente invention a pour but de remédier à ces inconvénients et notamment de réaliser un dispositif de gestion de microinstructions enregistrées dans une mémoire d'une unité de traitement de l'information, qui permette un adressage rapide des microinstructions groupées en segments de microprogrammes, à partir de la base ou adresse de base de ces segments; l'invention a aussi pour but de faciliter la reprise de segments de microprogrammes interrompus, à la suite par exemple d'un incident, et de faciliter également le choix de microprogrammes ou de segments de microprogrammes permettant de changer le mode de fonctionnement d'une unité de traitement.

L'invention a pour objet un dispositif de gestion de microinstructions enregistrées dans une mémoire (M) d'une unité de traitement de l'information, ces microinstructions étant groupées en segments de microprogrammes, chaque segment étant défini par une base en fonction de chaque segment de microprogramme à dérouler, ce dispositif comprenant un registre d'adressage (AM) et un registre de lecture (RM) de la mémoire (M) reliés respectivement par leurs sorties et leurs entrées aux entrées d'adressage et aux sorties de lecture de cette mémoire, un additionneur (AD) dont les entrées reçoivent chaque base et sont d'autre part reliées à des sorties du registre de lecture (RM), des sorties de cet additionneur étant reliées à des entrées du registre d'adressage (AM), caractérisé en ce que les bases sont contenues dans une pluralité de registres de base (RB) dotés de moyens de pointage (MBP), les sorties du registre de lecture étant en outre reliées à des entrées de commande des moyens de pointage (MBP) des registres de base (BP), des moyens de sauvegarde (IM) étant reliés aux moyens de pointage (MBP) pour sauvegarder l'adresse du registre de base correspondant au segment de microprogramme en cours de déroulement, au moment d'une interruption.

Selon un mode de réalisation particulier, les moyens de pointage sont constitués par un registre de pointage (MBP) des registres de base, des sorties de ce registre de pointage étant reliées à des entrées d'adressage des registres de base (RB), les entrées de commande des moyens de pointage étant constituées par des premières entrées de chargement de ce registre de pointage (MBP) par des informations binaires contenues dans les microinstructions de chaque segment et correspondant au registre de base à pointer au cours du déroulement des microprogrammes, ce registre de pointage (MBP) comprenant en outre des deuxièmes entrées de chargement par des informations permettant de pointer les registres de bases (RB) au moment du chargement de ceux-ci par les bases de segments de microprogrammes à dérouler.

Selon un autre mode de réalisation, le registre de pointage comprend en outre des troisièmes entrées de chargement par des informations de commande d'interruption de déroulement de microprogramme, les sorties du registre de pointage étant reliées à des entrées de moyens de sauvegarde de l'adresse du registre de base correspondant au segment du microprogramme en cours de déroulement au moment de l'interruption, des sorties des moyens de sauvegarde étant reliées aux premières entrées de chargement du registre de pointage pour commander le retour du déroulement du segment interrompu.

Selon un autre mode de réalisation, le registre de pointage comprend en outre des quatrièmes entrées de chargement par des informations permettant de forcer le pointage sur des registres de bases particuliers.

Selon un autre mode de réalisation, les registres de base particuliers sont chargés par des informations relatives à des bases de segments de microprogrammes commandant respectivement des modes particuliers de fonctionnement de l'unité de traitement.

Selon un autre mode de réalisation, les moyens de sauvegarde comprennent un registre de sauvegarde et un circuit logique du type «ET» dont les entrées constituent les entrées des moyens de sauvegarde et sont reliés aux sorties du registre de pointage ainsi qu'aux troisièmes entrées du registre de pointage, les sorties de ce circuit logique étant reliées à des entrées du registre de sauvegarde, les sorteies du registre de sauvegarde étant reliées aux premières entrées du registre de pointage et constituant les sorties des moyens de sauvegarde, une porte logique de commande étant connectée entre les sorties du registre de sauvegarde et les premières entrées du registre de pointage, cette porte logique présentant une entrée de commande apte à recevoir un signal de commande pour vider le registre de sauvegarde dans le registre de pointage, lorsqu'une reprise du microprogramme interrompu, est à effectuer.

Selon un autre mode de réalisation, le registre de sauvegarde comprend en outre une partie réservée à l'enregistrement de l'adresse de la microinstruction en cours d'exécution au moment d'une interruption, cette partie présentant des entrées reliées à des sorties d'un compteur d'adresses de la mémoire et présentant des sorties reliées à d'autres entrées de l'additionneur.

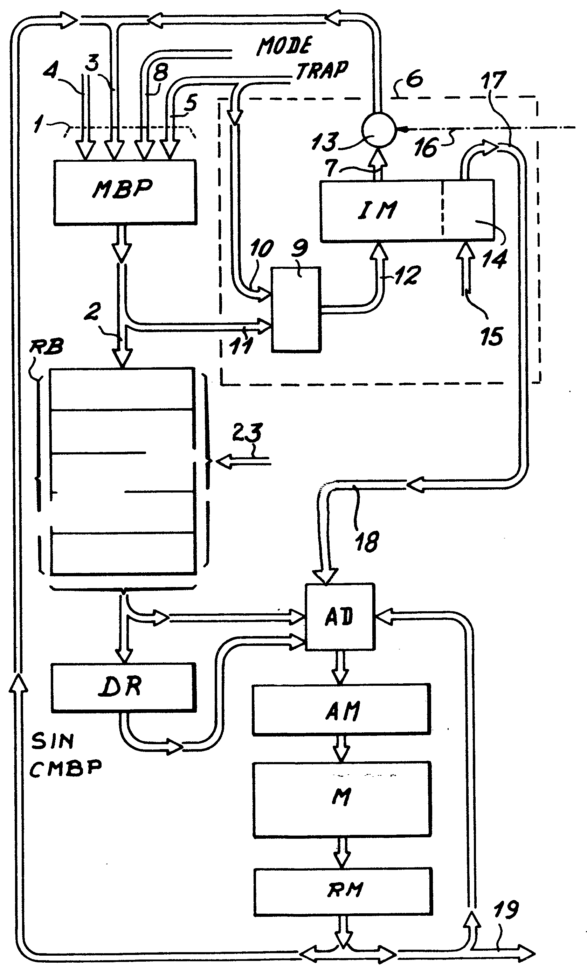

Les caractéristiques et avantages de l'invention ressortiront mieux de la description qui va suivre, donnée en référence à la figure annexée représentant de manière schématique, un dispositif de gestion de microinstructions, conforme à l'invention.

La figure représente un dispositif de gestion de microinstruction enregistrées dans une mémoire M d'une unité de traitement de l'information. Ces microinstructions sont groupées de manière connue, selon le brevet précité en segments de microprogrammes; chaque segment est défini par une base ou adresse de base à partir de laquelle l'accès aux différentes microinstructions contenues dans le segment est rendu possible.

Ce dispositif comprend un banc de registres de base RB et des moyens de pointage MBP qui permettent d'adresser ces registres de base, en fonction de chaque segment de microprogramme à dérouler ou à brancher. Le dispositif comprend également, de manière connue, un registre d'adressage AM de la mémoire M, ainsi qu'un registre de lecture RM de cette mémoire; ces registres sont respectivement reliés par leurs sorties et leurs entrées aux entrées d'adressage et aux sorties de lecture de la mémoire M. Enfin, de manière connue, le dispositif comprend un additionneur ou progresseur AD dont les entrées sont reliées, d'une part aux registres de base RB et, d'autre part, à des sorties du registre de lecture RM. Un compteur d'adresses de la mémoire M (non représenté) permet, grâce à une progression d'adresses d'une unité, de passer d'une microinstruction à la microinstruction suivante dans le microprogramme en cours de déroulement. Enfin, selon l'invention, les sorties du registre de lecture RM sont reliées à des entrées de commande 1, des moyens de pointage MBP des registres de base. Ces moyens de pointage sont constitués par un registre de pointage des registres de base. Les sorties de ces moyens de pointage sont reliées à des entrées d'adressage 2 des registres de base, qui reçoivent en outre sur leurs entrées 23, des informations nécessaires à la définition des bases de segments, au moment de la configuration de l'unité de traitement de l'information dans laquelle intervient le dispositif de l'invention. Les entrées de commande des moyens de pointage comprennent des premières entrées 3 de chargement de ce registre de pointage, par des informations binaires contenues dans les microinstructions de chaque segment et provenant du registre de lecture RM de la mémoire M; ces informations binaires concernent l'adresse ou numéro du registre de base à pointer au cours du déroulement des segments de microprogrammes. Le registre de pointage MBP comprend en outre des deuxièmes entrées 4 qui permettent de charger ce registre par des informations de pointage des registres de base, au moment du chargement de ceux-ci par les bases de segments de microprogrammes à dérouler. Le registre de pointage comprend également des troisièmes entrées 5, de chargement par des informations de commande d'interruptions «TRAP» de déroulement de microprogrammes. Les sorties du registre de pointage MBP sont reliées à des moyens 6, qui permettent de sauvegarder l'adresse du registre de base correspondant aux segments de microprogrammes en cours de déroulement au moment de l'interruption; des sorties 7 de ces moyens de sauvegarde sont reliées aux premières entrées 3 du registre de pointage, pour commander le retour au déroulement du segment interrompu, lorsque l'interruption a cessé. Enfin, le registre de pointage comprend des quatrièmes entrées 8, de chargement par des informations qui permettent de forcer le pointage sur des registres de base particuliers. Ces informations, représentées ici par l'instruction «MODE», sont relatives à des bases de segments de microprogrammes qui concernent respectivement des modes particuliers de fonctionnement de l'unité de traitement; ces modes de fonctionnement peuvent être par exemple des modes de simulation d'une «autre machine». Dans l'exemple de réalisation représenté sur la figure, les bases des segments de microprogrammes concernant le mode de fonctionnement de l'unité de traitement, sont généralement contenues dans les deux premiers registres du banc de registres RB.

Les moyens de sauvegarde 6 comprennent un registre de sauvegarde IM et un circuit logique 9 de type «ET», dont les entrées 10 et 11 constituent les entrées des moyens de sauvegarde et sont reliées d'une part aux sorties du registre de pointage MBP ainsi qu'aux troisièmes entrées 5 de ce registre de pointage. Ce circuit logique permet, lorsqu'une interruption «TRAP» intervient à l'entrée du dispositif, de transférer dans le registre de sauvegarde IM, les informations binaires contenues dans le registre de pointage MBP et qui correspondent à l'adresse du registre de base relatif au segment de microprogramme en cours d'exécution. Les sorties du circuit logique 9, sont à cet effet, reliées à des entrées 12 du registre de sauvegarde. Les sorties 7 du registre de sauvegarde constituent les sorties des moyens de sauvegarde et son reliées aux premières entrées 3 du registre de pointage MBP. Une porte logique de commande 13 est connectée entre les sorties 7 du registre de sauvegarde IM et les premières entrées 3 du registre de pointage; cette porte logique permet, lorsqu'elle reçoit un signal de commande «RETOUR» sur une entrée de commande 16, de vider le contenu du registre de sauvegarde IM, dans le registre de pointage MBP, lorsqu'une reprise du microprogramme interrompu est à effectuer. Les portes logiques 9 et 13 sont bien connues dans l'état de la technique et ne sont pas décrites ici en détail. Le registre de sauvegarde IM comprend en outre une partie 14 qui est réservée à l'enregistrement de l'adresse de la microinstruction en cours d'exécution, au moment d'une interruption. Cette partie présente des entrées 15 qui sont reliées à des sorties du compteur d'adresses de la mémoire M. Ce compteur est constitué de manière connue et n'est pas représenté sur la figure. Des sorties 17 de cette partie 14 du registre IM sont reliées à des entrées 18 de l'additionneur AD. Ainsi, lors d'une interruption, l'adresse du registre de base qui avait été sélectionnée pour le déroulement d'un segment de microprogramme donné, est sauvegardée dans le registre IM, tandis que l'adresse de la microinstruction interrompue, par rapport à la base correspondante, est sauvegardée dans la partie 14 de ce registre. Lorsqu'une interruption a cessé, l'adresse du registre de base concernant le microprogramme interrompu, qui a été sauvegardée dans le registre IM, est de nouveau introduite dans le registre de pointage MBP, tandis que l'adresse concernant la microinstruction interrompue est introduite dans le registre d'adresse Am de la mémoire M. Ceci permet de retrouver dans la mémoire M, l'adresse de la microinstruction interrompue. Les microinstructions provenant du registre de lecture RM de la mémoire M, sont appliquées par les sorties 19 de ce registre aux moyens concernés de l'unité de traitement dans laquelle intervient le dispositif de l'invention. Les changements de base sont indiqués par des microinstructions particulières «SIN» et «CMBP», à la sortie du registre de lecture RM de la mémoire M. Les microinstructions «SIN» permettent de forcer le pointage de deux registres par exemple du banc de registres RB, de manière à sélectionner l'un des deux microprogrammes particuliers au mode de fonctionnement de l'unité de traitement de l'information. Les microinstructions «CMBP» permettent de pointer l'un des registres du bac RB, à chaque changement de base.

Le compteur d'adresses de la mémoire M qui est constitué de manière connue, n'a pas été représenté en détails sur la figure; il permet de manière connue, d'assurer la progression des adresses de microinstructions, une à une, dans les microprogrammes chargés dans la mémoire M. Cette mémoire peut être une mémoire morte de type ROM mais elle peut également être constituée par une partie de la mémoire centrale, de type RAM.

Enfin, le dispositif de l'invention comprend en outre un registre DR de recopie de la base courante. Ce registre permet de donner un accès immédiat à la base sans utilisation du pointeur. La nouvelle base, lors d'un changement de base, est recopiée dans ce registre.

Le dispositif qui vient d'être décrit permet bien, comme on l'a mentionné plus haut, de faciliter l'adressage de microinstructions dans des segments de microprogrammes contenus dans la mémoire d'une unité de traitement de l'information; elle permet également la reprise du déroulement d'un segment de microprogramme, après interruption.

**Revendications**

1. Dispositif de gestion de microinstructions enregistrées dans une mémoire (M) d'une unité de traitement de l'information, ces microinstructions étant groupées en segments de microprogrammes, chaque segment étant défini par une base en fonction de chaque segment de microprogramme à dérouler, ce dispositif comprenant un registre d'adressage (AM) et un registre de lecture (RM) de la mémoire (M) reliés respectivement par leurs sorties et leurs entrées aux entrées d'adressage et aux sorties de lecture de cette mémoire, un additionneur (AD) dont les entrées reçoivent chaque base et sont d'autre part reliées à des sorties du registre de lecture (RM), des sorties de cet additionneur étant reliées à des entrées du registre d'adressage (AM), caractérisé en ce que les bases sont contenues dans une pluralité de registres de base (RB) dotés de moyens de pointage (MBP), les sorties du registre de lecture (RM) étant en outre reliées à des entrées de commande des moyens de pointage (MBP) des registres de base (BP), des moyens de sauvegarde (IM) étant reliés aux moyens de pointage (MBP) pour sauvegarder l'adresse du registre de base correspondant au segment de microprogramme en cours de déroulement, au moment d'une interruption.

2. Dispositif de gestion selon la revendication 1, caractérisé en ce que les moyens de pointage sont constitués par un registre de pointage (MBP) des registres de base (RB), des sorties de ce registre de pointage étant reliées à des entrées d'adressage (2) des registres de base (RB), les entrées de commande des moyens de pointage (MBP) étant constituées par des premières entrées (3) de chargement de ce registre de pointage (MBP) par des informations binaires contenues dans les microinstructions de chaque segment et correspondant au registre de base (RB) à pointer au cours du déroulement des microprogrammes, ce registre de pointage (MBP) comprenant en outre des deuxièmes (4) entrées de chargement par des informations permettant de pointer les registres de bases (RB) au moment du chargement de ceux-ci par les bases de segments de microprogrammes à dérouler.

3. Dispositif de gestion selon la revendication 2, caractérisé en ce que le registre de pointage (MBP) comprend en outre des troisièmes entrées (5) de chargement par des informations de commande d'interruption (TRAP) de déroulement de microprogramme, les sorties du registre de pointage (MBP) étant reliées à des entrée des moyens de sauvegarde (IM) de l'adresse du registre de base correspondant au segment de microprogramme en cours de déroulement au moment de l'interruption, des sorties (7) des moyens de sauvegarde (IM) étant reliés aux premières entrées de chargement (3) du registre de pointage (MBP) pour commander le retour du déroulement du segment interrompu.

4. Dispositif de gestion selon la revendication 3, caractérisé en ce que le registre de pointage (MBP) comprend en outre des quatrièmes entrées (8) de chargement par des informations permettant de forcer le pointage sur des registres de bases particuliers (MODE).

5. Dispositif de gestion selon la revendication 4, caractérisé en ce que lesdits registres de bases (RB) particuliers sont chargés par des informations relatives à des bases de segments de microprogrammes commandant respectivement des modes particuliers de fonctionnement de l'unité de traitement.

6. Dispositif de gestion selon la revendication 3, caractérisé en ce que les moyens de sauvegarde comprennent un registre de sauvegarde (IM) et un circuit logique (9) de type «ET» dont les entrées (10, 11) constituent les entrées des moyens de sauvegarde et sont reliées aux sorties du registre de pointage (MBP) ainsi qu'aux troisièmes entrées (5) du registre de pointage, les sorties de ce circuit logique (9) étant reliées à des entrées (12) du registre de sauvegarde (IM), les sorties du registre de sauvegarde étant reliées aux premières entrées du registre de pointage (MBP) et constituant les sorties des moyens de sauvegarde, une porte logique (13) de commande étant connectée entre les sorties du registre de sauvegarde (IM) et les premières entrées du registre de pointage (MBP), cette porte logique (13) présentant une entrée de commande apte à recevoir un signal de commande (16) pour vider le registre de sauvegarde (IM) dans le registre de pointage (MBP), lorsqu'une reprise du microprogramme interrompu est à effectuer.

7. Dispositif de gestion selon la revendication 6, caractérisé en ce que le registre de sauvegarde (IM) comprend en outre une partie (14) réservée à l'enregistrement de l'adresse de la microinstruction en cours d'exécution au moment d'une interruption, cette partie (14) présentant des entrées (15) reliées à des sorties d'un compteur d'adresses de la mémoire et présentant des sorties (17) reliées à d'autres entrées (18) de l'additionneur (AD).

8. Dispositif de gestion selon la revendication 7, caractérisé en ce qu'un registre (DR) de recopie de la base courante est prévu pour donner accès immédiat à cette base sans utilisation du registre de pointage (MBP), la nouvelle base lors d'un changement de base étant recopiée dans ledit registre (DR).

**Claims**

1. Device for managing microinstructions recorded in a memory (M) of a data processing unit, these microinstructions being grouped in segments of microprograms, each segment being defined by a base as a function of each microprogram segment to be implemented, this device comprising an address register (AM) and a read register (RM) of the memory (M) connected respectively via their outputs and their inputs to the address inputs and read outputs of this memory, an adder (AD) of which the inputs receive each base and are connected on the other hand to outputs of the read register (RM), outputs of this adder being connected to inputs of the address register (AM), characterised in that the bases are contained in a plurality of base registers (RB) provided with checking means (MBP), the outputs of the read register (RM) being connected moreover to control inputs of the checking means (MBP) of the base registers (BP), safeguarding means (IM) being connected to the checking means (MBP) to safeguard the address of the base register corresponding to the microprogram segment in the course of implementation, at the instant of an interruption.

2. Managing device according to claim 1, characterised in that the checking means are formed by a checking register (MBP) of the base registers (RB), outputs ot this checking register being connected to address inputs (2) of the base registers (RB), the control inputs of the checking means (MBP) being formed by first inputs (3) for charging this checking register (MBP) with binary data contained in the microinstructions of each segment and corresponding to the base register (RB) which is to be located during the implementation of the microprograms, this checking register (MBP) furthermore comprising second inputs (4) for charging with data enabling the base registers (RB) to be checked at the instant of charging these with the bases of segments of microprograms to be implemented.

3. Managing device according to claim 2, characterised in that the checking register (MBP) furthermore comprises third inputs (5) for loading with control data for interruption (TRAP) of microprogram implementation, the outputs of the checking register (MBP) being connected to inputs of the means (IM) of safeguarding the address of the base register corresponding to the microprogram segment in the course of implementation at the instant of the interruption, outputs (7) of the safeguarding means (IM) being connected to the first charging inputs (3) of the checking register (MBP) to operate the reversal of the implementation of the segment interrupted.

4. Managing device according to claim 3, characterised in that the checking register (MBP) furthermore comprises fourth inputs (8) for charging with data enabling imposing the checking action on particular base registers (MODE).

5. Managing device according to claim 4, characterised in that the said particular base registers (RB) are charged with data relating to bases of segments of microprograms respectively controlling particular modes of operation of the processing unit.

6. Managing device according to claim 3, characterised in that the safeguarding means comprise a safeguarding register (IM) and a logic circuit (9) of the AND type of which the inputs (10, 11) form the inputs of the safeguarding means and are connected to the outputs of the checking register (MBP) as well as to the third inputs (5) of the checking register, the outputs of this logic circuit (9) being connected to the inputs (12) of the safeguarding register (IM), the outputs of the safeguarding register being connected to the first inputs of the checking register (MBP) and forming the outputs of the safeguarding means, a logic control gate (13) being connected between the outputs of the safeguarding register (IM) and the first inputs of the checking register (MBP), this logic gate (13) having a control input able to receive a control signal (16) for emptying the safeguarding register (IM) into the checking register (MBP) if a resumption of the interrupted microprogram is to be performed.

7. Managing device according to claim 6, characterised in that the safeguarding register (IM) furthermore comprises a section (14) reserved for recording the address of the microinstruction in the course of execution at the instant of an interruption, this section (14) having inputs (15) connected to outputs of an address counter of the memory and having outputs (17) connected to other inputs (18) of the adder (AD).

8. Managing device according to claim 7, characterised in that a register (DR) for recopying the current base is provided to yield immediate access to this base without utilisation of the checking register (MBP), the new base being recopied into the said register (DR) on the occasion of a change of base.

**Patentansprüche**

1. Vorrichtung zur Verwaltung von Mikrobefehlen, die in einem Speicher (M) einer Informationsverarbeitungseinheit gespeichert sind, wobei diese Mikrobefehle in Mikroprogrammsegmenten gruppiert sind, von denen jedes Segment durch eine Basis in Abhängigkeit von jedem Segment des abzuwickelnden Mikroprogrammes definiert ist, wobei diese Vorrichtung ein Adressierregister (AM) und ein Leseregister (RM) für den Speicher (M) umfasst, bei denen die Ausgänge mit den Adressiereingängen bzw. die Eingänge mit den Ausleseausgängen dieses Speichers verbunden sind, und einen Addierer (AD) umfasst, dessen Eingänge jede Basis empfangen und ferner mit Ausgängen des Leseregisters (RM) verbunden sind, und wobei Ausgänge dieses Addierers mit Eingängen des Adressierregisters (AM) verbunden sind, dadurch gekennzeichnet, dass die Basen in einer Mehrzahl von Basisregistern (RB) enthalten sind, welche mit Zeigermitteln (MBP) ausgestattet sind, wobei die Ausgänge des Leseregisters (RM) ferner mit Steuereingängen der Zeigermittel (MBP) der Basisregister (BP) verbunden sind und wobei Schutzmittel (IM) mit den Zeigermitteln (MBP) verbunden sind, um die Adresse des Basisregisters, welche dem gerade abgewickelten Mikroprogrammsegment entspricht, im Zeitpunkt einer Unterbrechung zu bewahren.

2. Verwaltungsvorrichtung nach Anspruch 1, dadurch gekennzeichnet, dass die Zeigermittel gebildet sind durch ein Zeigerregister (MBP) der Basisregister (RB), wobei Ausgänge dieses Zeigerregisters mit Adressiereingängen (2) der Basisregister (RB) verbunden sind, wobei die Steuereingänge der Zeigermittel (MBP) durch erste Ladeeingänge (3) zum Laden dieses Zeigerregisters (MBP) mit Binärinformationen gebildet sind, welche in den Mikrobefehlen jedes Segmentes enthalten sind und dem Basisregister (RB) entsprechen, auf das während der Abwicklung der Mikroprogramme gezeigt werden soll, und wobei dieses Zeigerregister (MBP) ferner zweite Ladeeingänge (4) zum Laden von Informationen umfasst, die es ermöglichen, auf die Basisregister (RB) in demjenigen Moment zu zeigen, wo diese mit den Basen der abzuwickelnden Mikroprogrammsegmente geladen werden.

3. Verwaltungsvorrichtung nach Anspruch 2, dadurch gekennzeichnet, dass das Zeigerregister (MBP) ferner dritte Ladeeingänge (5) zum Laden mit Unterbrechungs-Steuerinformationen (TRAP) für die Unterbrechung des Mikroprogrammablaufs umfasst, wobei die Ausgänge des Zeigerregisters (MBP) mit Eingängen der Schutzmittel (IM) zum Schützen der Adresse des Basisregisters verbunden sind, welche dem Mikroprogrammsegment entspricht, das zum Zeitpunkt der Unterbrechung gerade abgewickelt wird, und wobei Ausgänge (7) der Schutzmittel (IM) mit den ersten Ladeeingängen (3) des Zeigerregisters (MBP) verbunden sind, um die Wiederaufnahme der Abwicklung des unterbrochenen Segmentes zu steuern.

4. Verwaltungsvorrichtung nach Anspruch 3, dadurch gekennzeichnet, dass das Zeigerregister (MBP) ferner vierte Ladeeingänge (8) zum Laden von Informationen umfasst, die es ermöglichen, das Hinzeigen auf besondere Basisregister (MODE) zu erzwingen.

5. Verwaltungsvorrichtung nach Anspruch 4, dadurch gekennzeichnet, dass die genannten besonderen Basisregister (RB) mit Informationen geladen werden, welche die Basen von Mikroprogrammsegmenten betreffen, die jeweils besondere Betriebsweisen der Verarbeitungseinheit steuern.

6. Verwaltungsvorrichtung nach Anspruch 3, dadurch gekennzeichnet, dass die Schutzmittel ein Schutzregister (IM) und eine Logikschaltung (9) vom «AND»-Typ enthalten, deren Eingänge (10, 11) die Eingänge der Schutzmittel bilden und mit den Ausgängen des Zeigerregisters (MBP) sowie mit den dritten Eingängen (5) des Zeigerregisters verbunden sind, während die Ausgänge dieser Logikschaltung (9) mit Eingängen (12) des Schutzregisters (IM) verbunden sind und die Ausgänge des Schutzregisters mit den ersten Eingängen des Zeigerregisters (MBP) verbunden sind und die Ausgänge der Schutzmittel bilden, wobei ferner eine logische Steuer-Torschaltung (13) zwischen die Ausgänge des Schutzregisters (IM) und die ersten Eingänge des Zeigerregisters (MBP) eingefügt ist und wobei diese logische Torschaltung (13) einen Steuereingang umfasst, der zum Empfangen eines Steuersignals (16) zum Ausleeren des Schutzregisters (IM) in das Zeigerregister (MBP) geeignet ist, wenn eine Wiederaufnahme des unterbrochenen Mikroprogramms durchzuführen ist.

7. Verwaltungsvorrichtung nach Anspruch 6, dadurch gekennzeichnet, dass das Schutzregister (IM) ferner einen Teil (14) umfasst, der für die Aufzeichnung der Adresse des Mikrobefehls reserviert ist, welcher zum Zeitpunkt einer Unterbrechung gerade ausgeführt wird, wobei dieser Teil (14) Eingänge (15) aufweist, die mit Ausgängen eines Adressenzählers des Speichers verbunden sind, und Ausgänge (17) aufweist, welche mit weiteren Eingängen (18) des Addierers (D) verbunden sind.

8. Verwaltungsvorrichtung nach Anspruch 7, dadurch gekennzeichnet, dass ein Register (DR) zum Aufzeichnen der laufenden Basis vorgesehen ist, um unmittelbaren Zugang zu dieser Basis ohne Verwendung des Zeigerregisters (MBP) zu gewähren, wobei die neue Basis während des Einladens einer Basis in diesem Register (DR) aufgezeichnet wird.